# EUROPEAN PATENT APPLICATION

(11) **EP 1 803 760 A1**
(43) Date of publication of application: **04.07.2007**
(21) Application number: 05028768.9
(22) Date of filing: 30.12.2005
(51) Int. Cl.: C08G 59/18, C08G 59/50

(54) **Aqueous aminic curing agent for epoxy resins**

(71) Applicant: Cytec Surface Specialties Austria GmbH, 8010 Graz (AT)
(72) Inventor: Lunzer, Florian, Dr., 8018 Barcelona (ES); geisberger, Martin, Dr., 8045 Graz (AT); Grasböck, Rosemaria, Dr., 8010 Graz (AT); Gollner, Andreas, 8054 Graz (AT); Ossanna, René, 8020 Graz (AT); Prucher, Elfriede, 8046 Graz (AT)
(74) Representative: Deckers, Hellmuth Alexander

(57) **Abstract**

A curing agent for aqueous epoxy resins which is the reaction product **ABC** of a polyoxyalkylene polyol modified epoxy resin **AB** made from an epoxy resin **B** and a polyoxyalkylene polyol **A**, with 1,2-diaminocyclohexane **C1** or a mixture of amines C which amine mixture comprises a mass fraction of at least 30 % of 1,2-diaminocyclohexane **C1**, based on the mass of the said amine mixture, a process for its preparation, and a method of use thereof in coating metal and mineral substrates

## Description

The invention relates to an aqueous aminic curing agent for aqueous two component epoxy resin systems, to a process for its preparation, and a method of use thereof especially in flooring applications.

Curing of aqueously dispersed epoxy resins with epoxy amine curing agents has been described, i. a., in US Patent 4,197,389. Epoxy resins are first reacted with hydrophilic polyoxyalkylene glycols, and the remaining epoxide groups are consumed by reaction with amines. By addition of olefinically unsaturated compounds, the amines are rendered less reactive to ensure a sufficient pot life of two pack compositions formulated with such curing agents and epoxy resins. Such olefinically unsaturated compounds are preferably acrylonitrile and methacrylonitrile.

While such cyanoethylated or cyanopropylated amines have lower reactivity compared to the unmodified amines, and therefore impart also extended potlife to epoxy amine adducts used as curing agents for epoxy resins, it has been found that the hardness of films prepared with these systems is reduced, even after a one week's rest after application. It is therefore the object of the invention to make available an aqueous curing agent that provides an extended potlife without sacrifice in final hardness as developed one week after application. The use of other amines or amine mixtures has not been satisfactory because while the reactivity of other primary amines is too high, leading to short pot life, secondary amines are not reactive enough, leading to even longer drying times and slow development of hardness, especially at ambient temperature.

Variants of the synthetic route described supra, such as reacting amino terminated polyether glycols with diepoxy compounds, and then with an excess of polyamines in the second step, such as described in EP-A 0 387 418, or reacting an emulsifier made from an amine terminated polyoxyalkylene, an aliphatic diglycidyl ether, and a fatty amine, with a coemulsifier made from a polyamine, an aliphatic diglycidyl ether and a fatty amine, with a bisamine adduct made from an epoxy resin and a polyamine as described in EP-A 0 567 831 did not improve this short potlife.

The object of the present invention, therefore, is to make available a curing agent for water-borne epoxy resin systems which exhibits a pot life of at least six hours in combination with the said epoxy resins, and which develops a satisfactory final hardness.

This object has been achieved by incorporation of 1,2-diaminocyclohexane into the aqueous curing agent.

The invention therefore relates to a curing agent which is the reaction product **ABC** of a polyoxyalkylene polyol modified epoxy resin **AB** made from an epoxy resin B and a polyoxyalkylene polyol **A,** with 1,2-diaminocyclohexane **C1** or a mixture of amines C which amine mixture comprises a mass fraction of at least 30 % of 1,2-diaminocyclohexane (**C1**), based on the mass of the said amine mixture.

The invention also relates to a process for the preparation of curing agents **ABC** by step-wise reaction of a polyoxyalkylene polyol **A** with an epoxy resin **B,** to form an adduct **AB,** which is then reacted with an amine mixture **C** comprising a mass fraction of at least 30 % of 1,2-diaminocyclohexane (**C1**), under consumption of the remaining epoxide groups.

The invention further relates to two-pack water-borne epoxy resin systems comprising the curing agent **ABC,** water and an epoxy resin **E,** which is preferably aqueously dispersed, and to a method of use of such two-pack water-borne epoxy resin systems for the coating of substrates, especially mineral, stone, and concrete substrates for flooring applications.

Specifically, the curing agents **ABC** comprise a reaction product of at least one polyepoxide compound **B**, at least one polyoxyalkylene polyol **A**, and an amine mixture C comprising at least one compound **C2** selected from the group consisting of aliphatic, cycloaliphatic and heterocyclic amines having at least one primary, secondary, or tertiary amino group, and 1,2-diaminocyclohexane **C1,** wherein the said amine mixture **C** comprises a mass fraction of at least 30 % of the said amine **C1.** In a preferred embodiment, the mass fraction of 1,2-diaminocyclohexane **C1** in the amine mixture is at least 45 %, and especially preferred, at least 50 %.

The amounts of components **A, B** and **C** are preferably chosen in a way that the ratio of the number of epoxide groups in **B** to the number of hydroxyl groups in the polyoxyalkylene polyol **A** is from 1:0.05 to 1:0.75, particularly preferred, from 1:0.1 to 1:0.6, and especially preferred, from 1:0.2.to 1:0.5.

The polyoxyalkylene polyols **A** have at least two hydroxyl groups and at least one ether linkage within a molecule, where the alkylene residues are preferably selected from the group consisting of ethylene, 1,2-propylene, and 1,4-butylene groups, and mixtures thereof. Preferred compounds **A** are polyethylene glycols, polypropylene glycols, mixtures thereof, mixed hydroxy functional oligomers and polymers comprising repeating units of oxyethylene and oxypropylene moieties, as well as mixtures of polyoxyethylene and polyoxypropylene glycols on one hand with polyoxybutylene glycols on the other hand, preferably each having a number average molar mass of from 200 g/mol to 100 kg/mol. Such latter mixtures lead to cured epoxy resins having improved flexibility. Especially preferred are polyoxyethylene glycols having a number average molar mass of from 400 g/mol to 20 kg/mol, and in particular, polyoxyethylene glycols having a number average molar mass of from 600 g/mol to 10 kg/mol.

The polyepoxide compounds **B** have at least two epoxide groups per molecule. They may be derived from epoxidation of diolefins, such as alpha-omega alkane dienes, or from the reaction of epichlorohydrin with aliphatic or aromatic diols or polyols, such as 1,4-butane diol, 1,6-hexane diol, or the polyoxyalkylene polyols mentioned supra as compounds A, and preferably, from diphenols or polyhydric phenols such as bisphenol **A,** bisphenol F, dihydroxydiphenyl, dihydroxydiphenyl ether, dihydroxydiphenyl sulphone and dihydroxy benzophenone, or phenol novolaks. Other useful polyepoxide compounds may be formed, in a known manner, via the so-called advancement process by reaction of di-or polyepoxides with dihydric or polyhydric phenols. The polyepoxide compounds **B** may also be selected from the group consisting of esters of glycidyl alcohol with dibasic or polybasic aliphatic or aromatic acids such as adipic acid, succinic acid, terephthalic acid, 4,4'-diphenyl dicarboxylic acid, trimellithic aid, and 1,4-cylohexane dicarboxylic acid.

It is possible for the present invention to use only 1,2-diaminocyclohexane, abbreviated as **C1.** Preferably, however, amine mixtures **C** are used, in the context of the present invention, which comprise a mass fraction of at least 30 % of the said 1,2-diaminocyclohexane which is a by-product of the synthesis of 1,6-diaminohexane, which latter is used in the manufacture of polyamide 66. As such, 1,2-diaminocyclohexane as commercially obtained may also contain minor quantities of other aminic compounds, i. e. such amines which taken together have a mass fraction of not more than 10 %, of further byproducts of the said synthesis.

The amines C2 may be selected from the group consisting of linear or branched aliphatic polyamines and mixed aliphatic-aromatic amines where the amino groups are bonded to an aliphatic carbon atom, having in each case at least two secondary or primary amino groups, or both primary and secondary amino groups. Preferred amines are isophorone diamine, 1,6-hexane diamine, diethylene triamine, triethylene tetramine, meta-xylylene diamine, tetramethyl xylylene diamine, which amines may also be reacted with olefinically unsaturated compounds to which the amines are added. Preferably they are cyanaoethylated, or cyanopropylated by reaction with acrylonitrile or methacrylonitrile. It is also possible to use amines having at least one tertiary and at least one primary amino group, such as N,N-dimethyl-3-aminopropylamine or N,N-diethyl-3-aminopropylamine. Further amines that can be used for the purpose of this invention are secondary hydroxyamines such as diethanolamine and diisopropanolamine.

The curing agents **ABC** may be used together with solid or liquid epoxy resins, wherein they also provide the capability of emulsifying the epoxy resins **E** in the aqueous phase. No further emulsifier is then needed.

Suitable epoxy resins **E** may be selected from epoxy compounds mentioned supra under **B.** It is particularly preferred to use epoxy resins selected from the group consisting of bisphenol **A** or bisphenol **F** based epoxy resins, or mixtures thereof, having a specific content of epoxide groups of from 1.5 mol/kg to 7.5 mol/kg, preferably from 1.65 mol/kg to 7.0 mol/kg. The epoxy resins E may also comprise mixtures of the epoxy resins mentioned supra, as well as reactive diluents which are monoepoxy compounds, such as butyl glycidyl ether, cresyl glycidyl ether, hexyl glycidyl ether, 2-ethylhexyl glycidyl ether, to lower the viscosity.

A preferred way to make the curing agents **ABC** of the present invention is in a first step to react epoxy resins **B** with polyoxyalkylene polyols or preferably, glycols, **A,** in the presence of catalysts such as Lewis acids, or complexes comprising such Lewis acids. Particularly preferred are catalysts such as boron trifluoride, or its complexes such as with ethers or amines. The adducts **AB** thus formed are then reacted with amine mixtures **C** which comprise a mass fraction of at least 30 % of 1,2-diaminocyclohexane, **C1.**

In one preferred embodiment of the invention, the curing agents **ABC** comprise a reaction product which has been obtained from a mass fraction of from 20 % to 80 % of an adduct derived from a polyepoxide compound **B** comprising from 2 mol to 4 mol of epoxy groups, and from a polyoxyalkylene polyol **A** having from 0.2 mol to 1.5 mol of hydroxyl groups, with from a mass fraction of from 80 % to 20 % of the amine or amine mixture **C**, the quantity of amine used being chosen such that the amino hydrogen atoms are in 2 to 30, preferably from 4 to 25 times stoichiometric excess, relative to the number of reactive epoxide groups.

Preferably, a mass fraction of from 50 % to 70 % of an adduct made from a quantity of a polyepoxide compound **B** having from 2.3 mol to 3.0 mol of epoxide groups, and a quantity of a polyoxyalkylene polyol A having from 0.3 mol to 0.8 mol of hydroxyl groups is reacted with a mass fraction of from 50 % to 30 % of the amine or amine mixture **C**, where the quantity of amine **C** is chosen such that there is an excess of the number of amino hydrogen atoms over the number of reactive epoxide groups of a factor of from 5 to 8.

In another preferred embodiment of the invention, the amines **C2** have been reacted, partly or fully, with unsaturated compounds **D** which may undergo addition reactions, whereby for each 1 mol of hydrogen atoms bonded to an amino nitrogen atom, an amine component **C2** is further reacted, before or after reaction with the adduct of components **A** and **B,** with an amount of an unsaturated compound having up to 0.5 mol, preferably from 0.1 mol to 0.3 mol of olefinic double bonds which may undergo addition reactions, of the formula 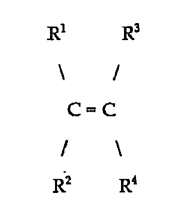 wherein R¹ is an electronegative group selected from the group consisting of -CN, -COOR⁵, -CO-R⁶, and -CO-NR⁷. R², R³, and R⁴ can all individually be selected from the group consisting of hydrogen, alkyl residues having from 1 to 8 carbon atoms, or aryl groups such as phenyl. R⁵, R⁶, and R⁷ can also be individually selected from the group consisting of alkyl residues having from 1 to 8 carbon atoms, or aryl groups such as phenyl. Preferred are acrylonitrile, methacrylonitrile, and alkyl esters of acrylic or methacrylic acids. An "electronegative" group is a substituent which lowers the electron density at the carbon atom to which it is linked in comparison to a hydrogen atom as substituent.

Reaction with the unsaturated compound **D** is preferably effected by the addition of this compound, in the case of acrylonitrile, at a temperature of from 20 °C to 70 °C, and after the addition the reaction mixture is allowed to stand at an elevated temperature, in the instant case preferably of from 50 °C to 80 °C. The most preferred compounds for component C2 are xylylene diamine, isophorone diamine, and 1,6-hexane diamine, 2,2,4- or 2,4,4-trimethylhexamethylene diamine, polyoxypropylene diamine and mixtures thereof.

Among the catalysts for the reaction between the polyepoxy compounds **B** and the polyoxyalkylene polyols **A,** it is preferred to use BF₃ -amine complexes, for example, those which are formed from BF₃ and at least one amine selected from the group consisting of n-amylamine, aniline, beta-phenylethylamine, or 2-aminoethylbenzene, 2-ethylbenzimidazole, benzylamine, trans-bornylamine, 1-amino-3-methylbutane,1,4-diaminobutane, n-butylamine, tert.-butylamine, n-butyl cyclohexylamine, cyclohexylamine, n-decylamine, diethylamine, diisobutylamine, diisopropylamine, dimethylamine, n-dodecanamine or laurylamine, 2-aminoethanol, ethylamine, hexadecane amine, 1-aminoheptane, 2-aminoheptane, n-hexylamine, 2,4-dimethylimidazole, morpholine, methylamine, n-nonylamine, octadecane amine, octylamine, 3-aminopentane, 3-amino- 3-methylpentane, n-pentadecylamine, piperazine, propylamine, pyrrolidine, tetradecanamine or myristylamine, tridecanamine, triethylamine, and trimethylamine. BF₃-benzylamine, BF₃-monoethylamine, BF₃-propylamine and BF₃-n-butylarnine complexes are preferably used as the catalyst. For 1 mol of hydroxyl groups to be reacted with 1 mol of epoxide groups, from 100 mmol to 1 mmol, preferably from 25 mmol to 2 mmol, of the BF₃-amine complex catalyst are conveniently used. Reaction of the hydroxyl groups with the epoxide groups can be carried out in a temperature range from 20 °C to 200 °C. The reaction temperature is generally dependent on the particular BF₃-amine complex used. For example, if BF₃-monoethylamine or BF₃-benzylamine are used, the reaction temperature is preferably about 130 °C. The mixture of compounds containing hydroxyl groups and epoxide groups to be reacted are therefore heated appropriately up to the temperature at which the reaction takes place at a desired rate, for example over 30 minutes to 15 hours. The progress of the reaction is conveniently monitored via the decrease in the specific amount of substance of epoxide groups in the reaction mixture.

The reaction may be discontinued by cooling the mixture below the reaction temperature. During the reaction a part of the BF₃-amine complex is consumed by incorporation of fluoride ions into the reaction product. Any excess of the BF₃ -amine complex may be destroyed by the addition to the reaction mixture of basic substances such as Fuller's earth, calcium oxide, calcium hydroxide, barium oxide or barium hydroxide in excess. These basic substances are themselves removed by filtration together with the products obtained from reaction with the BF₃-amine complexes. The adduct obtained which still contains reactive epoxide groups is added to the amine component **C**, generally at a temperature of from 20° C to 100 °C, or alternatively the amine component C is added to the adduct **AB** preferably at a temperature of from 20 °C to 40 °C. The reaction mixture is then allowed to stand at an elevated temperature, preferably at from 50 °C to 80 °C, with stirring for from 1 to 3 hours.

The curing agents according to the invention are optionally used together with emulsifiers and solid or liquid epoxy resins in the preparation of aqueous curable epoxy resin compositions which are employed as coating or covering agents. The epoxy resin compositions which may be cured with the curing agents according to the invention may contain further additives such as, for example, wetting agents. Preferred wetting agents are non-ionic wetting agents known in the art, which are generally based on modified alkyl phenols, such as for example alkylphenoxypoly-(ethyleneoxy)ethanol, a condensate of nonyl phenol and ethylene oxide, containing an amount of substance of from 9 mol to 10 mol of ethylene oxide for each 1 mol of nonyl phenol, and the like.

The epoxy resins E, optionally mixed with diluents and/or wetting agents, are generally mixed with water, in an amount such that the resulting dispersion preferably contains a mass fraction of up to 50 % of water. If a combination of epoxy resin and curing agent according to the invention is used as a block filler or if pigments are added, the water content may amount up to a mass fraction of 90 %.

Pigmented coating compositions of epoxy resins and curing agents according to the invention may be prepared by adding to the aqueous dispersion containing epoxy resins and the curing agent according to the invention, pigments such as titanium dioxide and iron oxide; fillers such as ground limestone, arenaceous quartz, talc, mortar and other materials similar to cement; pigment dispersing agents, antisettling agents, antifoaming agents, and other conventional dyestuffs and coating adjuvants.

The compositions containing epoxy resins and the aqueous curing agents according to the invention may be applied to substrates in any known way. Suitable methods include: brush application, rolling, spraying, casting, dipping, wiping, pressing, trowelling, electrical precipitation, silk-screen printing etc.

The compositions containing epoxy resins and curing agents according to the invention may be used as primers, varnishes, fillers, clear sealers, protective paints, coverings, sealings, thin mortars, mortars, and the like. Their use is especially appropriate when resistance to corrosion is desired. The compositions may also be employed with mixtures of epoxy resins with thermoplastic materials such as coal tar, vinyl polymers, etc. They may also be used as binding agents for pressed coal, conductive floor coverings and putty fillers, as adhesives for wood, fabric, leather and metal and for various laminated supports such as cemented floors, walls, swimming pools, glased tiles, etc. Further, the epoxy resin compositions may be mixed with mortar or cement, water being used in the emulsion to make the cement pasty. Conversely, the water in the cement mixture may be used as a solvent for the epoxy resin dispersion. Addition of the curing agent according to the invention makes it possible to homogeneously mix cement and the dispersion comprising epoxy resin and curing agent. Thus, it is possible to obtain cement hardened with the dispersion of epoxy resin and curing agent.

The following examples serve to illustrate the invention:

### EXAMPLES

### Preparation of curing agents

### Example 1

2200 g of polyethylene glycol, having an average molar mass of 1000 g/mol, and 3520 g of a technical grade bisphenol A- diglycidyl ether having a specific content of epoxide groups of 5.56 mol/kg ("epoxy value" of 180 g/mol) were charged into a reaction vessel and heated to 125 °C under a nitrogen blanket until a homogeneous mixture was formed. 14,7 g of a BF₃ -amine complex (®Anchor 1040) were then added. The mixture was further heated during three and one half hours to 160 °C and this temperature was maintained until the theoretical epoxide group content of from 2.38 mol/kg to 2.41 mol/kg ("epoxy value" of 415 g/mol to 420 g/mol) was reached.

The mixture was cooled to 50 °C, whereupon a solution of 150 g of dipropylamine in 350 g of water were added.

### Example 2

A mixture of 2147 g of 1,2-diaminocyclohexane and 595 g of m-xylylene diamine were charged into another vessel, to which the mixture of Example 1 was added during three hours, with the temperature rising during addition to about 75 °C to 80 °C. The reaction mixture was kept at about 80 °C for one hundred and fifty more minutes. Then, fully deionised water was added in two portions, the first portion of 2200 g being stirred in to form an opaque dispersion, and the second portion of 300 g to adjust the mass fraction of solids of the dispersion formed to 75.2 %. The specific content of amino hydrogen atoms based on the mass of the dispersion was determined to be 7.0 mol/kg. The dispersion had a viscosity, measured at 23 °C and a shear rate of 25 s-1, in accordance with DIN EN ISO 3219, of 14 751 mPa·s. Its amine number was 219 mg/g, determined in accordance with DIN 16945, item 5.6. Before further processing, the dispersion was diluted to a mass fraction of solids of 40 % by addition of water, to lower its viscosity.

### Example 3

A mixture of 1763.5 g of 1,2-diaminocyclohexane and 1724.8 g of an adduct prepared by reaction of 0.8 mol of acrylonitrile and 1 mol of isophorone diamine were charged into another vessel, to which the mixture of Example 1 was added during three hours, with the temperature rising during addition to about 75 °C to 80 °C. The reaction mixture was kept at about 80 °C for one hundred and fifty more minutes. Then, fully deionised water was added in two portions, the first portion of 1686.2 g being stirred in to form an opaque dispersion, and the second portion of 307 g to adjust the mass fraction of solids of the dispersion formed to 80.0 %. The specific content of amino hydrogen atoms based on the mass of the dispersion was determined to be 6.8 mol/kg. The dispersion had a viscosity, measured at 23 °C and a shear rate of 25 s⁻¹, in accordance with DIN EN ISO 3219, of 21 732 mPa·s. Its amine number was 220 mg/g, determined in accordance with DIN 16945, item 5.6. Before further processing, the dispersion was diluted to a mass fraction of solids of 40 % by addition of water, to lower its viscosity.

### Example 4

A series of aqueously dispersed epoxy coating compositions was prepared, where a solvent free liquid epoxy resin based on bisphenol A having a specific epoxide groups content of 5.4 mol/kg (®Beckopox EP 140, Cytec Surface Specialties Germany GmbH & Co. KG) was admixed the aqueous dispersion of curing agent of Example 3 ("H3"), and those aqueous dispersions of curing agents known from EP 0 000 605 B1, Examples 3C ("V1") and 3B ("V2"), all these dispersions having a mass fraction of solids of 40 %, according to the following recipe (m standing for the mass of the epoxy resin, or the mass of the aqueous dispersions of the curing agent mentioned):

**Table 1 Components of the Coating Compositions**

| Coating Composition | 4.1 | 4.2 | 4.3 |
|---|---|---|---|
| *m*(EP 140) | 20.0 g | 20.2 g | 20.2 g |
| *m*(V2) | 43.2 g | - | - |
| *m*(H3) | - | 31.8 g | - |
| *m*(V1) | - | - | 31.4 g |

These three coating compositions were tested for pot life (the time when the gloss of a coating made from the coating composition that had been stored after mixing for that specified time was 50 % or less of the gloss of a coating applied directly after mixing), the pendulum hardness (Koenig) as an indication for the extent of curing after application, and the appearance of a coated surface (on a scale of from 0 to 5, 0 standing for "clear" and 5 standing for "opaque"). The results obtained are summarised in table 2.

**Table 2 Properties of the Coating Compositions**

| Coating Composition | 4.1 | 4.2 | 4.3 |
|---|---|---|---|
| Pot Life | 225 min | > 450 min | 75 min |
| Surface Appearance | 0 to 1 | 0 to 1 | 1 |
| Pendulum Hardness | 205 s | 217 s | 219 s |

It can be seen that the goal to provide a curing agent which leads to longer pot life of the mixture ready for application lasting for a normal working day of at least six hours has been achieved, with little sacrifice in hardness, and no adverse effect on the surface appearance.

This effect of adding 1,2-diaminocyrlohexane could not have been predicted from the state of the art. While the application of 1,2-diaminocyclohexane as curing agent or component of an aminic curing agent in bulk or solvent-borne epoxy resins has been known, there has not been reported a similar effect in these systems. Such experiments have been duplicated, and it has been found that in bulk or solvent-borne compositions, 1,2-diaminocyclohexane behaves "perfectly normal", as any other diprimary amine such as diethylene triamine, 1,3-diaminopentane, 2-methyl-1,5-diaminopentane, a mixture of 2,2,4- and 2,4,4-trimethyl-l,6-diaminohexane, isophorone diamine and meta-xylylene diamine, alone or in mixture with these, with no indication of en extension of the pot life in the combinations tested. The only amines tested which lead to an increase in pot life in such bulk and solvent-borne epoxy resin compositions were those based on amino-functional polyoxypropylene compounds which have been commercialised under the name of ®Jeffamine. While longer pot life can be realised with curing agents comprising these specialty amines, it has been found, on the other hand, that the water resistance of coatings made therewith is impaired, compared to coatings made with the other amines recited supra. Such adverse effect on the water resistance has not been found in the curing agents according to this invention.

## Claims

1. A curing agent for aqueous epoxy resins which is the reaction product ABC of a polyoxyalkylene polyol modified epoxy resin **AB** made from an epoxy resin **B** and a polyoxyalkylene polyol **A,** with 1,2-diaminocyclohexane **C1** or a mixture of amines **C** which amine mixture comprises a mass fraction of at least 30 % of 1,2-diaminocyclohexane **C1,** based on the mass of the said amine mixture.

2. The curing agent **ABC** of claim 1 wherein the amine mixture **C** comprises at least one compound **C2** selected from the group consisting of aliphatic, cycloaliphatic and heterocyclic amines having at least one primary, secondary, or tertiary amino group.

3. The curing agent **ABC** of claim 1 wherein the amounts of components **A** and **B** are chosen in a way that the ratio of the number of epoxide groups in **B** to the number of hydroxyl groups in the polyoxyalkylene polyol **A** is from 1:0.05 to 1:0.75.

4. The curing agent **ABC** of claim 1 wherein the polyoxyalkylene polyols **A** have at least two hydroxyl groups and at least one ether linkage within a molecule, where the alkylene residues are preferably selected from the group consisting of ethylene, 1,2-propylene, and 1,4-butylene groups, and mixtures thereof.

5. The curing agent **ABC** of claim 1 wherein the polyepoxide compounds **B** are selected from the group consisting of compounds prepared by epoxidation of diolefins, and the reaction products of epichlorohydrin with aliphatic or aromatic diols or polyols.

6. The curing agent **ABC** of claim 1 wherein the amines **C2** are selected from the group consisting of isophorone diamine, 1,6-hexane diamine, diethylene triamine, triethylene tetramine, meta-xylylene diamine, tetramethyl xylylene diamine, N,N-dimethyl-3-aminopropylamine, N,N-diethyl-3-aminopropylamine, diethanolamine and diisopropanolamine.

7. The curing agent **ABC** of claim 1 wherein the amines **C2** are at least partly reacted with unsaturated compounds **D** which may undergo addition reactions, and which carry an electronegative group.

8. A process for the preparation of the curing agent **ABC** of claim 1 by step-wise reaction of a polyoxyalkylene polyol **A** with an epoxy resin **B,** to form an adduct **AB,** which is then reacted with an amine mixture **C** comprising a mass fraction of at least 30 % of 1,2-diaminocyclohexane **C1,** under consumption of the remaining epoxide groups.

9. The process of claim 8 wherein in the first step, the amounts of components **A** and **B** are chosen in a way that the ratio of the number of epoxide groups in **B** to the number of hydroxyl groups in the polyoxyalkylene polyol **A** is from 1:0.05 to 1:0.75, and where, in the second step, the amount of the amine mixture **C** is chosen in a way to completely consume the epoxide groups remaining in the reaction product of **A** and **B.**

10. A two-pack water-borne epoxy resin systems comprising the curing agent **ABC** of claim 1, water and an epoxy resin **E.**

11. A method of use of the curing agent **ABC** of claim 1, comprising dispersing the curing agent **ABC** in water to from an aqueous dispersion, adding thereto an epoxy resin E having a specific amount of epoxide groups of from 1.5 mol/kg to 7.5 mol/kg, mixing the aqueous dispersion and the epoxy resin E, and applying the said mixture to a substrate selected from the group consisting of metal surfaces, and mineralic surfaces comprising concrete flooring, concrete slabs, and concrete walls.
